# EUROPEAN PATENT APPLICATION

(11) **EP 4 198 373 A1**
(43) Date of publication of application: **21.06.2023**
(21) Application number: 22383218.9
(22) Date of filing: 15.12.2022
(51) Int. Cl.: F16L 55/11, B65D 59/02

(54) **SEALING ELEMENT FOR PIPES**

(30) Priority: 16.12.2021 ES 202132476 U
(71) Applicant: Brao Amo, Antonio, 08206 Sabadell (ES)
(72) Inventor: Brao Amo, Antonio, 08206 Sabadell (ES)
(74) Representative: Isern Patentes y Marcas S.L.

(57) **Abstract**

A sealing element for pipes, comprising a body made up of a section of stem (2), a circular plant head region (3) at one end of the stem that acts as a grip area, in which the stem includes a plurality of parallel positioning regions (4, 5) with a substantially discoidal shape, having a primary positioning region (4) that has a larger diameter than the rest of the secondary positioning regions. The primary positioning region (4) has two sections (40) devoid of material diametrically opposed to each other, so as to define two opposite fins capable of bending, and wherein a positioning region (5) adjacent to the primary positioning region in a direction to head region (3) has two sections (50) devoid of material which are offset in 90 degrees with respect to the positioning of the two sections (40) devoid of material of the region of primary positioning.

## Description

### OBJECT OF THE INVENTION

The object of the present application is to provide a sealing element for pipes.

More specifically, the invention proposes the development of a sealing element for pipes that is simple to manufacture and that has regions that facilitate the introduction of the piece into one end of a tube or conduit.

### BACKGROUND OF THE INVENTION

Once tubular elements intended, for example, to create conduits to allow fluids to pass have been manufactured, they are usually accumulated or stored in open outdoor spaces and/or in closed areas. Since the two opposite ends of such conduits are exposed to the outside environment, the inside thereof is subject to possible dirt agents as well as the fact that small animals, such as insects, rodents, etc., can get inside.

To solve this problem, document ES 1236244 which defines a closing cap that satisfactorily solves the aforementioned drawback is known. Although the placement of the cap on the end of a tube does not present a difficulty for the operator in charge of carrying out such an operation, such an action can give rise to pain or discomfort in the operator's fingers when said action must be carried out repetitively and continuously during a working day, thereby affecting the performance of the operator.

Furthermore, the applicant is currently unaware of an invention that has all the features described in this specification.

### DESCRIPTION OF THE INVENTION

The present invention has been developed with the purpose of providing a sealing element which is configured as a novelty within the field of application and solves the aforementioned drawbacks, further contributing other additional advantages that will be obvious from the description below.

An object of the present invention is therefore to provide a sealing element for pipes, that comprises a body of injection-mouldable plastic material, being made up of a section of stem that has a circular plant head region at one end that acts as a grip area, in which the stem section includes in a downward direction from said head region a plurality of parallel positioning regions with a substantially discoidal shape, having a primary positioning region that has a larger diameter than the rest of the secondary positioning regions. Particularly, the invention is characterized in that the primary positioning region has two sections devoid of material diametrically opposed to each other, so as to define two opposite fins capable of bending, and wherein a positioning region adjacent to the primary positioning region in a direction to head region has two sections devoid of material which are offset in 90 degrees with respect to the positioning of the two sections devoid of material of the region of primary positioning.

Thanks to these features, the two sections of the adjacent secondary positioning region define a free space that allows a greater bending angle of the sections of the primary positioning region since it allows the location of such sections during the bending action, for which the effort to place the sealing element inside one end of a tube is decreased.

In a preferred embodiment, each of the diametrically opposite stripped portions of the primary positioning region are defined by a concave recess.

According to another aspect of the invention, the sealing element includes at least two extensions spaced apart from one another, which protrude in the same direction perpendicular to the central stem section, and which have a length equal to or less than the diameter of the third positioning region. These two extensions act as contact points linked to the ejectors present in the mold for the manufacture of the tubular elements, in such a way that they facilitate the extraction and do not require the help of operators for its execution, since they ensure at all times the release of the piece of the mold in each process of injection of the pieces.

Preferably, the central rod has a cross-shaped cross-section.

According to a preferred embodiment, it comprises a primary positioning region and two secondary positioning regions, each of which is adjacent to the primary positioning region.

The sealing element for pipes disclosed represents, therefore, an innovative structure with structural and constitutive characteristics unknown up to now for the purpose for which it is intended, reasons that, together with its practical utility, provide it with sufficient grounds to obtain the privilege of exclusivity that is requests.

Other features and advantages of the sealing element object of the present invention will be evident in light of the description of a preferred, but not exclusive, embodiment which is illustrated by way of a non-limiting example in the drawings which are attached, wherein:

### BRIEF DESCRIPTION OF THE DRAWINGS

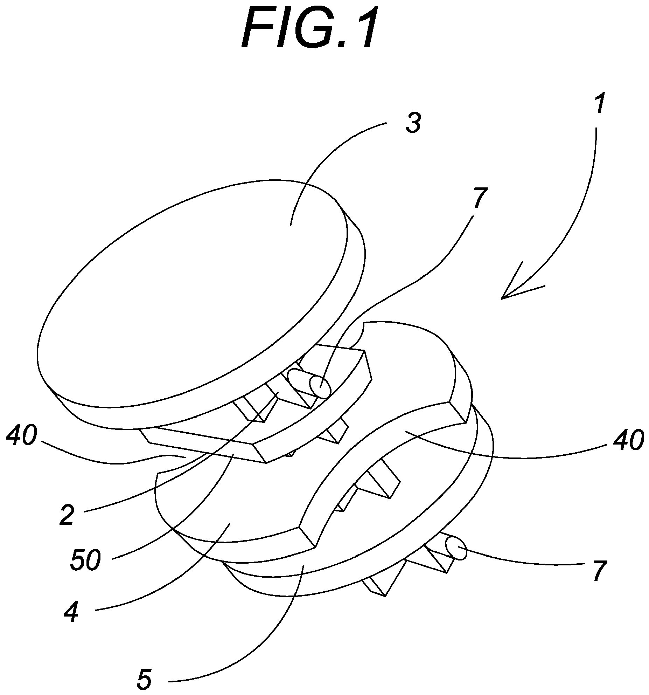

Figure 1 is a perspective view of a preferred embodiment of a sealing element for pipes according to the present invention;
Figure 2 is a side elevation and plan view from below of the sealing element shown in figure 1; and
Figure 3 is a perspective view of the sealing element which shows two different positions taken by the primary positioning region

### DESCRIPTION OF A PREFERRED EMBODIMENT

In light of the aforementioned figures, and in accordance with the adopted numbering, one may observe therein a preferred exemplary embodiment of the invention, which comprises the parts and elements indicated and described in detail below.

Furthermore, the terms first, second, third and the like in the description and in the claims are used to distinguish between similar items and not necessarily to describe a sequential or chronological order. The terms may be interchanged in appropriate circumstances and embodiments of the invention may operate in sequences other than those described or illustrated herein.

Furthermore, the terms top, bottom, top, bottom, and the like in the description and claims are used for descriptive purposes and not necessarily to describe relative positions.

The embodiment shown of the sealing element for pipes comprises a body (1) made up of injection-mouldable plastic material, for example, low-density polyethylene (LDPE), with a degree of elasticity such that it makes it easier for the operator to assemble the cap.

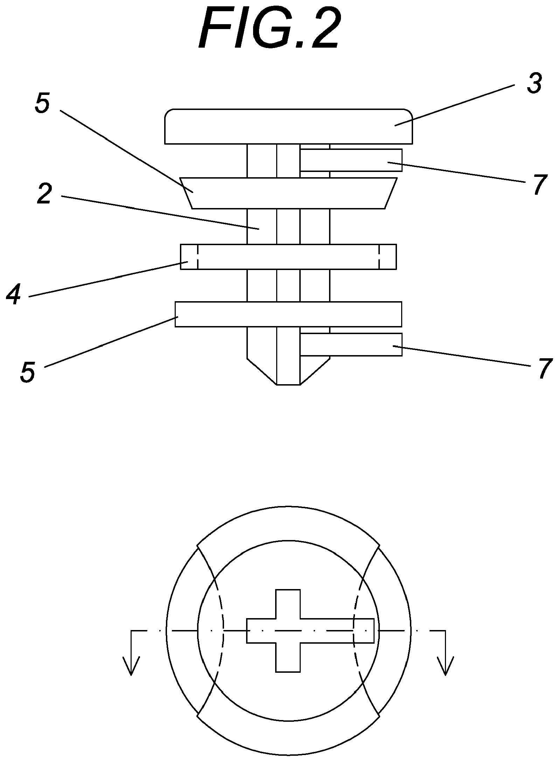

The body (1) is made up of a section of elongated central stem (2), with a cross-section in the shape of a cross (see figure 2), which has at one end a head region (3) with a circular plan and a flat surface that it acts as a grip area for the user in the operations of placing and removing the sealing element at one end of the conduit (not shown), as well as abutment against the side wall of the tube, once it is assembled. As shown, the head (3) protrudes radially considerably with respect to the section of central rod (2).

The section of central rod (2) includes along it and in a downstream direction from said head region (3) and in a separate way a plurality of parallel positioning regions with a substantially discoidal shape, having a primary positioning region (4) having a larger diameter than the rest of the secondary positioning regions (5). More specifically, it comprises a primary positioning region (4) and two secondary positioning regions (5), each of which is adjacent to the primary positioning region.

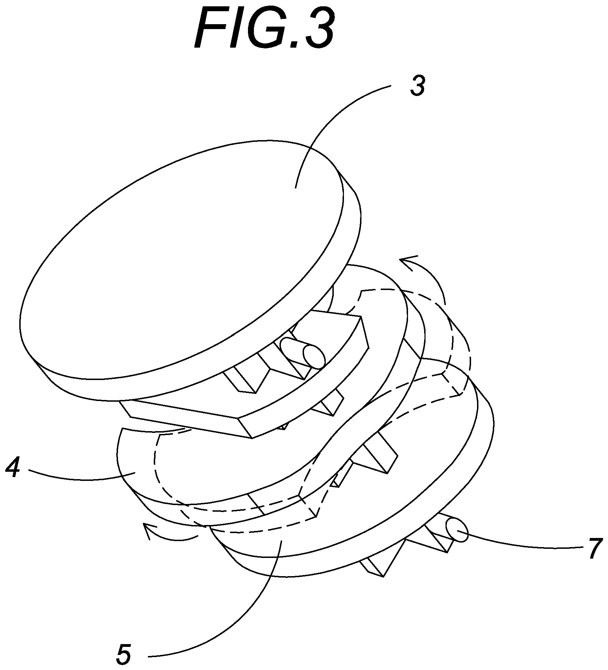

Particularly, the primary positioning region (4) has two sections (40) devoid of material diametrically opposed to each other, so as to define two opposite fins capable of bending, and wherein a positioning region adjacent to the primary positioning region (4) in the direction of the head region has two sections (50) devoid of material which are 90 degrees offset with respect to the positioning of the two sections devoid of material in the primary positioning region (4). In this way, the two sections (50) define a gap that allows a greater degree (angle) of bending of the sections (40) of the primary positioning region (4) since it allows the location of such sections (40) during the bending action, as can be seen in figure 3, where the initial rest position of the primary positioning region (4) has been represented with dashed lines and the primary positioning region (4) in a continuous line in a bent condition.

Each of the sections (40) devoid of material diametrically opposite each other of the primary positioning region (4) are defined by a concave recess.

Additionally, the body (1) includes a pair of extensions (7) of circular cross-section that are spaced apart from each other, and that protrude in the same direction perpendicular to the section of the central rod, which have a length equal to or less than the diameter of the third positioning region.

The details, shapes, dimensions and other secondary elements, used to manufacture the sealing element of the invention, may be suitably replaced with others that do not depart from the scope defined by the claims included below.

## Claims

1. Sealing element for pipes, comprising a body of injection-mouldable plastic material, being made up of a section of stem that has a circular plant head region at one end that acts as a grip area, in which the stem section includes in a downward direction from said head region a plurality of parallel positioning regions with a substantially discoidal shape, having a primary positioning region that has a larger diameter than the rest of the secondary positioning regions, **characterized in that** the primary positioning region has two sections devoid of material diametrically opposed to each other, so as to define two opposite fins capable of bending, and wherein a positioning region adjacent to the primary positioning region in a direction to head region has two sections devoid of material which are offset in 90 degrees with respect to the positioning of the two sections devoid of material of the region of primary positioning.

2. Sealing element for pipes according to claim 1, **characterized in that** each of the sections devoid of material diametrically opposite each other of the primary positioning region are defined by a concave recess.

3. Sealing element for pipes according to claim 1, **characterized in that** it includes at least two extensions spaced apart, which protrude in the same direction perpendicular to the section of central rod, which have a length equal to or less than the diameter of the third positioning region.

4. Sealing element for pipes according to any of the preceding claims, **characterized in that** the central stem has a cross-shaped cross-section.

5. Sealing element for pipes according to any of the preceding claims, **characterized in that** it comprises a primary positioning region and two secondary positioning regions, each of them being adjacent to the primary positioning region.
